# EUROPÄISCHE PATENTANMELDUNG

(11) **EP 1 785 264 A1**
(43) Veröffentlichungstag der Anmeldung: **16.05.2007**
(21) Anmeldenummer: 06023474.7
(22) Anmeldetag: 10.11.2006
(51) Int. Cl.: B29D 31/00, B29C 33/00, B29C 33/68, B29C 33/76

(54) **Vorrichtung und Verfahren zum Herstellen von weichelastischen Bändern**

(30) Priorität: 14.11.2005 DE 10554173
(71) Anmelder: Tyco Electronics Raychem GmbH, 85521 Ottobrunn (DE)
(72) Erfinder: Beer, Alexander, 14163 Berlin (DE); Glaue, Andreas, 12205 Berlin (DE); Kunzmann, Jens-Peter, 13088 Berlin (DE); Dohnke, Ingo, 14513 Teltow (DE); Pfeiffer, Bernhard, 12309 Berlin (DE); Heise, Wolfgang, 12559 Berlin (DE); Braun, Peter, 12205 Berlin (DE)
(74) Vertreter: Grünecker, Kinkeldey, Stockmair & Schwanhäusser Anwaltssozietät

(57) **Zusammenfassung**

Mit der Erfindung soll eine Vorrichtung und ein Verfahren zum Herstellen von weichelastischen Bändern (31), insbesondere von Fugen- oder Dichtungsbändem, dahingehend verbessert werden, dass weichelastische Bänder technisch einfach und mit geringem Aufwand herstellbar sind. Diese Aufgabe wird durch eine Vorrichtung und ein Verfahren zum Herstellen von weichelastischen Bändern insbesondere von Fugen- oder Dichtungsbändem, gelöst welche ein mehrteiliges Formwerkzeug (1) und ein Trennmittel (2) aufweist, wobei das Formwerkzeug in geschlossenem Zustand einen Hohlraum (22) für die Aufnahme einer weichelastischen Masse aufweist, welche durch das Trennmittel (2) in eine Bandform separiert ist.

## Beschreibung

Die Erfindung betrifft eine Vorrichtung sowie ein Verfahren zum Herstellen von weichelastischen Bändern mit den Merkmalen des Anspruchs 1.

Weichelastische Bänder wie z.B. Silikonbänder finden vor allem in der Bauindustrie Verwendung. Sie wurden bisher in kontinuierlichen Fertigungsprozessen wie z.B. Extrudieren oder Rakeln als Endlosband gefertigt. Das Endlosband wurde dann auf bestimmte Längen zugeschnitten, auf Rollen gewickelt und verpackt. Die sehr hohe Weichheit und Eigenklebrigkeit des Silikonmaterials erwies sich bei den gängigen Herstellungsverfahren jedoch stets als äußerst problematisch. Die von der Industrie geforderten Eigenschaften sind mit dem herkömmlichen Herstellungsverfahren nur unter sehr großem Aufwand und zum Teil durch Einsatz von Sondermaschinen realisierbar.

Der Erfindung liegt daher die Aufgabe zugrunde eine Vorrichtung sowie ein Verfahren zum Herstellen von elastischen Bändern der eingangs genannten Gattung dahingehend zu verbessern, dass weichelastische Bänder technisch möglichst einfach und mit geringem Aufwand herstellbar sind.

Diese Aufgabe wird erfindungsgemäß gelöst mit einer Vorrichtung bzw. einem Verfahren mit den Merkmalen des Anspruchs 1 bzw. 12.

Mit der in Anspruch 1 beschriebenen Vorrichtung lassen sich weichelastische Bänder besonders einfach und in wenigen Arbeitsschritten herstellen. Die in den Hohlraum des Formwerkzeugs eingefüllte flüssige Formmasse wird durch das Einbringen des Trennmittels in die Masse in ein durchgängiges, langes Band vorbestimmter Länge geformt. Nach dem Härten der Formmasse kann das weichelastische Band in diesem Zustand dem Formwerkzeug entnommen werden. Dies erleichtert die Handhabung der weichelastischen und oft klebrigen Bandmasse während des Fertigungsprozesses.

In einer günstigen Ausführungsform der Erfindung kann das Trennmittel eine folienartige Wand aufweisen. Eine folienartige Wand gleitet gut durch die weichelastische Masse und erzeugt somit ein Band von guter Qualität.

Vorzugsweise kann das Trennmittel unter Ausbildung eines etwa bandartigen Zwischenraums für die weichelastische Masse annähemd spiralförmig angeordnet sein. Durch die spiralartige Form wird ein Band erzeugt, welches sich bereits in einem kompakten, aufgerollten Zustand befindet.

In einer Variante der Erfindung kann das Trennmittel in einer Ausnehmung, insbesondere in einer Nut, eines Teils des Formwerkzeugs aufgenommen sein. Das Trennmittel wird somit automatisch beim Zusammensetzen bzw. Schließen des Formwerkzeugs in den Hohlraum im Innem des Formwerkzeugs eingebracht. Je nach Ausbildung der Nut ist das Trennmittel dadurch reib- und/oder formschlüssig in dem Formwerkzeugteil gehalten. So lässt sich das Trennmittel gut in dem Hohlraum platzieren.

In einer weiteren Ausführungsform kann das Trennmittel an einem Teil des Formwerkzeugs angeordnet sein und sich in geschlossenem Zustand des Formwerkzeugs durch den Hohlraum hindurch erstrecken und an wenigstens einem weiteren Teil des Formwerkzeugs zur Anlage kommen. Dadurch wird eine saubere und durchgängige Separierung in die Bandform erreicht.

Günstigerweise kann ein Teil des Formwerkzeugs etwa wannenartig ausgebildet sein und eine Vertiefung für den Hohlraum zur Aufnahme der weichelastischen Masse aufweisen. Dies erleichtert das Einfüllen der weichelastischen Masse. Gleichzeitig wird durch die Vertiefung die spätere Form sowie die Länge des Bandes mitbestimmt.

In einer weiteren Ausführungsform der Erfindung kann wenigstens an einem der Teile des Formwerkzeugs ein die spätere Form der weichelastischen Masse bestimmender Formkern vorsehbar sein. Dadurch lässt sich die spätere Form der weichelastischen Masse mitbestimmen

Vorteilhafterweise kann um den Formkern herum ein ringartig geformtes Trägerelement angeordnet sein. Dies verhindert ein Ankleben bzw. Haften der weichelastischen Masse an dem Formkern und erleichtert somit die Entnahme des weichelastischen Bandes aus dem Formwerkzeug.

In einer Variante der Erfindung kann wenigstens eine der Wandungen des Hohlraums mit einem Separierelement versehen sein. Dies erleichtert die Entnahme des weichelastischen Bandes aus dem Formwerkzeug. Zudem wird die Handhabung des weichelastischen Bandes und damit die nachfolgende Verpackung erleichtert, da das Separierelement eine gute Angriffsfläche bietet und das fertige weichelastische Band vor eventuellen Verschmutzungen schützen lassen.

Günstigerweise kann das Separierungselement eine Folie oder ein Papier sein. Dieses eignet sich gut für weichelastische Dichtungsmassen.

In einer Variante der Erfindung können in wenigstens einem Teil des mehrteiligen Formwerkzeugs wenigstens zwei Zentrierstifte vorgesehen sein und wenigstens ein anderes Teil des Formwerkzeugs Öffnungen aufweisen, welche mit den Zentrierstiften korrespondieren. So lassen sich die beiden Formwerkzeugteile gut zueinander positionieren.

Vorteilhafterweise kann das Trennmittel und/oder das Separierungselement aus einem Material bestehen, dessen Adhäsionskräfte zur weichelastischen Masse geringer sind als die Kohäsionskräfte der ausgehärteten weichelastischen Masse und die Kohäsionskräfte des Trennmittels bzw. des Separierungselements. Dadurch lässt sich das Trennmittel bzw. das Separierungselement gut von der weichelastischen Masse lösen.

Die Aufgabe wird ferner gelöst durch die Merkmale des Anspruchs 13.

Dieses Verfahren benötigt im Vergleich zum Stand der Technik wenige einzelne Arbeitsschritte. Durch das erfindungsgemäße Verfahren lassen sich weichelastische Bänder direkt in einem kompakten, zum Bevorraten geeigneten Zustand fertigen. Durch das Einbringen der weichelastischen Masse in den Hohlraum des Formwerkzeugs und das Einsetzen des Trennmittels wird die Masse bereits in ihre fertige Bandform gebracht. Das Band wird bei diesem Verfahren also nicht wie bisher erst nachträglich z.B. durch Aufwickeln auf eine Rolle in diese kompakte Form gebracht, sondern bereits in diesem Zustand ausgeformt. Die Handhabbarkeit der klebrigen weichelastischen Masse wird dadurch verbessert.

In einer Ausführungsform der Erfindung kann eine Wandung des Hohlraums vor dem Einfüllen der weichelastischen Masse mit einem Separierungselement, insbesondere mit einer Folie aus PE, PP oder einem beschichteten Papier, versehen werden. Dies schützt das Formwerkzeug vor dem Ankleben der weichelastischen Masse und erleichtert die spätere Entnahme des fertigen weichelastischen Bandes.

Günstigerweise kann die weichelastische Masse um einen, die spätere Form der Masse bestimmenden Formkern in dem Hohlraum herum gegossen werden. So lässt sich die spätere Form der Masse definieren.

In einer Variante der Erfindung kann ein ringartiges Trägerelement um den Formkern herum angeordnet werden. Dies schützt den Formkern vor der klebrigen weichelastischen Masse und erleichtert somit die spätere Entnahme des Bandes aus dem Formwerkzeug.

Vorteilhafterweise kann der Hohlraum nur zu etwa 70% bis 90%, vorzugsweise zu etwa 75% bis 85% und insbesondere zu etwa 80% mit der weichelastischen Masse angefüllt werden. Dadurch kommt die weichelastische Masse nur mit bestimmten Wandungen des Hohlraums in Kontakt. Dies erleichtert die Entnahme des fertigen weichelastischen Bandes und ermöglicht eine größere Materialauswahl für die freibleibende Wandung.

In einer Variante der Erfindung kann das Trennmittel in eine Ausnehmung, welche in wenigstens einem Teil des Formwerkzeugs vorgesehen ist haltend eingebracht werden. So wird eine gute Handhabbarkeit und Positionierung des Trennmittels gewährleistet.

Günstigerweise kann die gehärtete weichelastische Masse zusammen mit dem eingebetteten Trennmittel und einem von der Masse eingefassten Trägerelement aus dem Formwerkzeug entnommen werden. So hat die Masse bereits ihre gebrauchsfertige Form. Das Trennmittel erleichtert dem Verbraucher das Entnehmen des Bandes und sorgt zusammen mit dem Trägerelement für eine gute Stabilität und Handhabbarkeit der Masse.

Die Aufgabe wird ferner gelöst mit einem weichelastischen Band mit den Merkmalen des Anspruchs 19.

Das erfindungsgemäß hergestellte Band wird bereits in einem kompakten, formstabilen, zum Bevorraten geeigneten Zustand erhalten. Das heißt, beim Erzeugen des weichelastischen Bandes durch das erfindungsgemäße Herstellungsverfahren wird das Band bereits in seine endgültige Form bzw. seinen endgültigen kompakten Zustand gebracht, in welchem es auch der Endverbraucher erhält. Ein derartiges Band lässt sich technisch einfach und mit geringem Aufwand herstellen. Es ist somit günstig zu produzieren. Das Trennmittel, welches die einzelnen Bandlagen voneinander separiert, erleichtert dem Endverbraucher die Abnahme des Bandes aus diesem Zustand.

In einer Ausführungsform der Erfindung kann das weichelastische Band in dem Bevorratungszustand des Bandkörpers mit einem etwa mittig angeordneten Trägerelement versehen sein. Das Trägerelement dient der einfachen Handhabbarkeit sowie der Stabilität des weichelastischen Bandes.

Günstigerweise kann wenigstens eine Seitenfläche des komprimierten Bandkörpers mit einem Separierungselement versehen sein. Dies erleichtert die Handhabung des komprimierten Bandkörpers z.B. beim Verpacken und schützt das Band z.B. gegen Verunreinigungen.

Im Folgenden wird eine Ausführungsform der Erfindung anhand der folgenden Zeichnungen beschrieben. Dabei zeigen:
- Figur 1: eine perspektivische Darstellung einer erfindungsgemäßen Vorrichtung zum Herstellen weichelastischer Bänder,
- Figur 2: einen Schnitt durch das geschlossene Formwerkzeug mit eingesetztem Trennelement und
- Figur 3: ein mit der erfindungsgemäßen Vorrichtung aus den Figuren 1 und 2 hergestelltes weichelastisches Material.

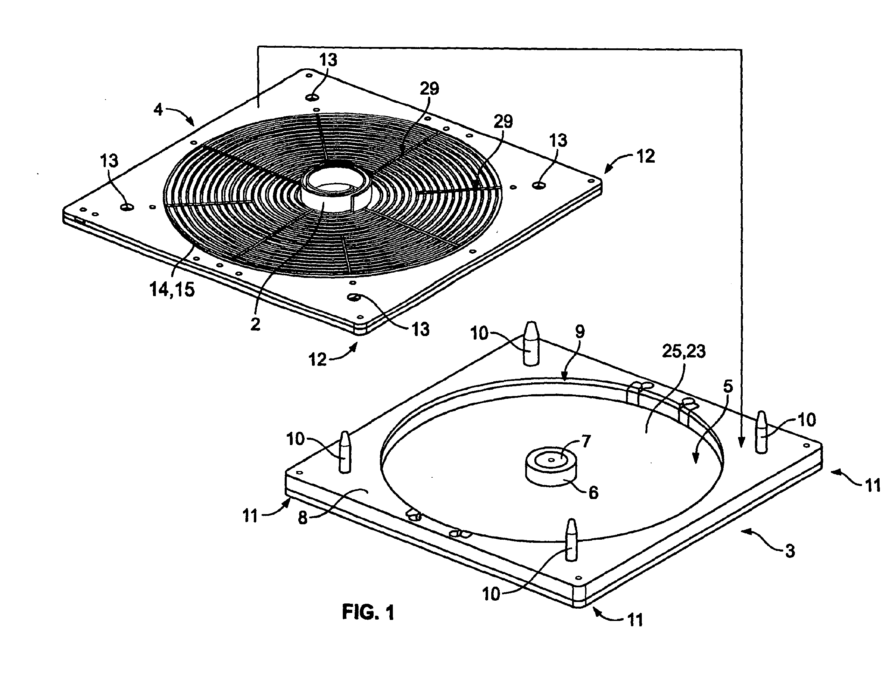

Figur 1 zeigt eine erfindungsgemäße Vorrichtung zum Herstellen weichelastischer Bänder in perspektivischer Darstellung. Die Vorrichtung weist in dieser Ausführungsform der Erfindung ein zweiteiliges Formwerkzeug 1 und ein Trennelement 2 auf.

Das Formwerkzeug 1 besteht in dieser Ausführungsform aus einem wannenartig ausgebildeten Teil 3 und einem als Deckel 4 ausgebildeten Teil. Das wannenartig ausgebildete Teil 3 des Formwerkzeugs 1 weist eine im Querschnitt etwa runde Vertiefung 5 auf. Ein in dieser Ausführungsform etwa zylindrisch geformter Formkern 6 ist etwa mittig in der Vertiefung 5 angeordnet. Die Oberfläche 7 des Formkerns 6 liegt dabei auf etwa gleicher Höhe wie ein Randbereich 8 des wannenartig ausgebildeten Teils 3.

Der äußere Rand der Vertiefung 5 ist hier mit einer Fase 9 versehen. Eine solche Fase kann in anderen Varianten der Erfindung z.B. auch an dem äußeren Rand des Formkerns 6 vorgesehen sein.

Der Randbereich 8 des wannenartig ausgebildeten Teils 3 des Formwerkzeugs ist mit mehreren Zentrierstiften 10 versehen. In dieser Ausführungsform sind vier Zentrierstifte auf dem Randbereich 8 angeordnet, je einer in jedem der vier Eckbereiche 11 des wannenartig ausgebildeten Teils 3. Die Zentrierstifte 10 sind hier annähemd auf einem Quadrat angeordnet und weisen unterschiedliche Durchmesser auf. Alternativ kann auch eine beliebige andere Anzahl von Zentrierstiften an anderen Positionen z.B. zwei Zentrierstifte, welche sich diagonal gegenüberliegen, vorgesehen sein. Die Zentrierstifte 10 können als separate Einzelteile gefertigt und in entsprechende Öffnungen des wannenartig ausgebildeten Teils 3 eingesetzt sein. Alternativ können sie auch einstückig mit dem wannenartigen Teil 3 ausgebildet sein. Die Spitzen der Zentrierstifte können konisch geformt bzw. angefast und/oder abgerundet sein.

In dieser Ausführungsform entspricht die Grundform des Deckels 4 des Formwerkzeugs 1 der Grundform des wannenartig ausgebildeten Teils 3. Der Deckel 4 ist in seinen Eckbereichen 12 mit Öffnungen 13 versehen, welche mit den Zentrierstiften 10 des wannenartig ausgebildeten Teils 3 korrespondieren. Je nach Länge der Zentrierstifte 10 können die Öffnungen 13 als Sackloch oder als Durchgangsöffnung ausgebildet sein.

Der Deckel 4 weist eine Ausnehmung 14 auf, welche der Aufnahme des Trennmittels 2 dient. Die Ausnehmung 14 ist in dieser Ausführungsform der Erfindung als lange, spiralförmig verlaufende Nut 15 ausgebildet. Der Durchmesser der spiralförmig angeordneten Nut ist dabei etwa gleich dem oder kleiner als der Durchmesser der Vertiefung 5 in dem wannenartig ausgebildeten Teil 3.

Das Trennmittel 2 ist in dieser Ausführungsform aus einer hinreichend steifen Folie gefertigt. Die Adhäsionskräfte der Folie zu der gehärteten, weichelastischen Masse sind dabei geringer als die Kohäsionskräfte der Folie. Das Trennmittel kann aus einem mit weichelastischen Massen, wie z.B. Silikon verträglichen Material hergestellt sein, z.B. aus PET, Polypropylen, Polyethylen oder einem beschichteten Papier. Es hat einen annähernd rechteckigen Querschnitt und ist als folienartige Wand ausgebildet. In anderen Varianten der Erfindung kann der Querschnitt jedoch dem Bandtyp angepasst sein und z.B. auch eine unregelmäßige oder gewölbte Form aufweisen. Die Wanddicke des Trennmittels liegt bevorzugt zwischen 0,2 und 2,0 mm. In dieser Ausführungsform ist das Trennmittel 0,3 mm stark. Das Trennmittel 2 ist in die Ausnehmung 14 bzw. die Nut 15 des Deckels 4 eingesetzt und wird hier reibschlüssig und/oder formschlüssig gehalten.

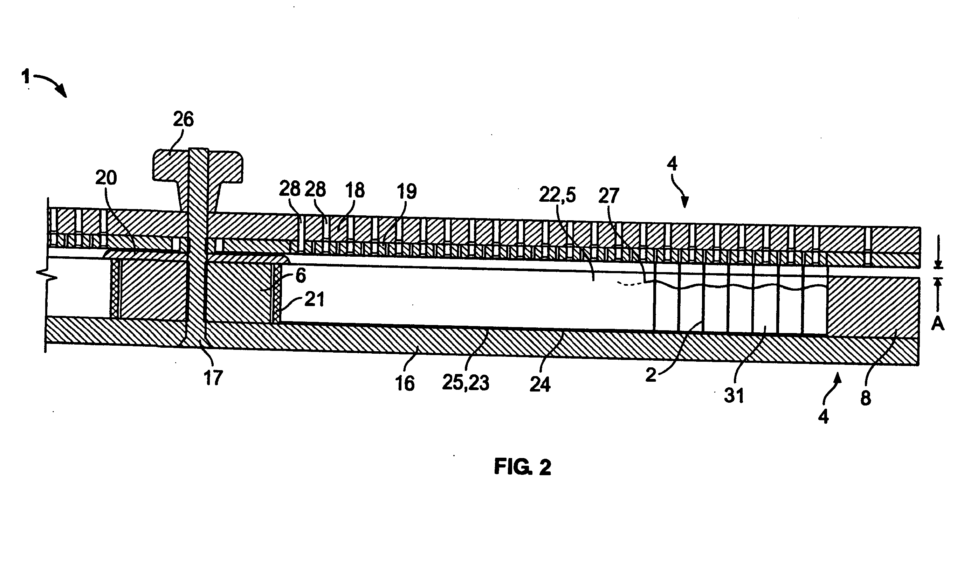

Figur 2 zeigt einen Schnitt durch das geschlossene Formwerkzeug 1 mit eingesetztem Trennmittel 2. Die in Figur 2 verwendeten Bezugszeichen bezeichnen dieselben Teile wie in Figur 1, so dass diesbezüglich auf die Beschreibung der Figur 1 verwiesen wird.

In dem Schnitt wird deutlich, dass sowohl das wannenartig ausgebildete Teil 3 als auch der Deckel 4 in dieser Ausführungsform aus mehreren Einzelteilen aufgebaut sind. Das wannenartig ausgebildete Teil 3 besteht hier aus einem separaten Randbereich 8, welcher mit einer Grundplatte 16 verbunden ist. Der Formkern 6 ist ebenfalls ein Einzelteil und wird hier durch einen Bolzen 17 in der Vertiefung 5 des wannenartig ausgebildeten Teils 3 festgelegt. Hier ebenfalls gut zu sehen ist ein Trägerelement 21, welches um den Formkern 6 herum angeordnet ist. Es besteht ebenfalls aus einem mit weichelastischen Massen verträglichen Material wie z.B. PET, PP, PE oder einer Zellstoffschicht. Vorzugsweise kann das Material des Trägerelements 21 so gewählt werden, dass die Adhäsionskräfte des Trägerelements 21 zu der gehärteten, weichelastischen Masse geringer sind als die Kohäsionskräfte des Trägerelements. In dieser Ausführungsform ist das Trägerelement 21 aus Pappe.

Der Deckel 4 besteht hier aus einer Basisplatte 18 und einem Aufnahmeteil 19, in welchem die Ausnehmung 14 bzw. Nut 15 eingeformt ist. Dies dient der Variabilität und der einfachen Fertigung des Formwerkzeugs 1. In dieser Ausführungsform ist das Aufnahmeteil 19 mittels mehrerer Schrauben 28 an der Basisplatte 18 befestigt. Die Schrauben 28 sind dabei in Reihen angeordnet, welche entlang der in Figur 1 dargestellten Sektorlinien 29 verlaufen. Alternativ kann das Aufnahmeteil 19 auch mit anderen gängigen Befestigungsmöglichkeiten wie z.B. Kleben, Klemmen oder Einrasten an der Basisplatte 18 befestigt werden. In anderen Varianten der Erfindung können jedoch sowohl das wannenartig ausgebildete Teil 3 als auch der Deckel 4 jeweils einstückig ausgebildet sein.

Das Trennmittel 2 ist in der Nut 15 angeordnet und kommt an der Basisplatte 18 des Deckels 4 zur Anlage. Es erstreckt sich durch einen Hohlraum 22 zwischen dem Deckel 4 und dem wannenartig ausgebildeten Teil 3, welcher beim Schließen des Formwerkzeugs 1 in seinem Inneren entsteht, und kommt an dem Boden 25 der Vertiefung 5 zu liegen. Die Wandung des spiralförmig angeordneten Trennmittels 2 unterteilt den Hohlraum 22 dabei in eine Bandform. Je zwei etwa parallel verlaufende Wandabschnitte des Trennmittels 2 bilden eine die spätere Bandform erzeugende Kammer 30, welche mit der weichelastischen Masse gefüllt ist.

Der Deckel 4 ist in dieser Ausführungsform über die Zentrierstifte 10 relativ zu dem wannenartig ausgebildeten Teil 3 positioniert und über den Bolzen 17 und die Flügemutter 26 axial fixiert. Alternativ zu dem Bolzen 17 können jedoch auch andere gängige Befestigungsmöglichkeiten wie z.B. Schrauben, Klemmen oder Rasten vorgesehen sein.

Zwischen dem Deckel 4 und dem wannenartig ausgebildeten Teil 3 ist in dieser Ausführungsform eine Distanzscheibe 20 vorgesehen. Diese fixiert zum einen das Trägerelement 21 und den Formkern 6 und ermöglicht zum anderen die Einstellungen des Abstands A zwischen dem wannenartig ausgebildeten Teil 3 und dem Deckel 4.

Eine Wandung des Hohlraums 22, nämlich der Boden 25 der Vertiefung 5, ist mit einem Separierungselement 24 versehen, welches hier aus einer Folie oder einem Papier besteht.

Obwohl das wannenartig ausgebildete Teil 3 in dieser Ausführungsform eine runde Vertiefung 5 und somit das Formwerkzeug 1 einen etwa zylindrischen Hohlraum 22 aufweist, ist die Erfindung nicht auf diese Ausführungsform begrenzt. In anderen Ausführungsformen der Erfindung kann das Formwerkzeug 1 auch einen beliebig anders geformten Hohlraum 22 aufweisen. Dieser kann z.B. oval oder auch eckig ausgebildet sein. Auch muss die Ausnehmung 14 und damit das Trennmittel 2 nicht zwangsläufig wie hier in Spiralform angeordnet sein. Gerade bei einem länglichen oder etwa rechteckig geformten Hohlraum bietet sich ein mehrteiliges Trennmittel an. Die Einzelteile des Trennmittels könnten dann z.B. in Nuten angeordnet werden, welche in zwei kammartigen Reihen verlaufen, die ineinander greifen. Dadurch würde z.B. ein ziehharmonikaartig zusammengefaltetes weichelastisches Band entstehen. Der optionale Formkern 6 könnte in einem solchen Fall z.B. gänzlich entfallen.

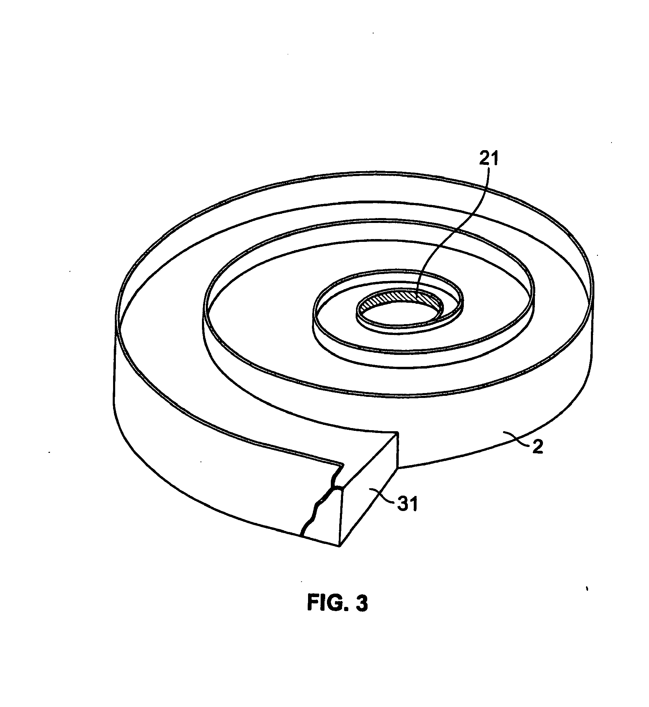

Figur 3 zeigt ein mit der erfindungsgemäßen Vorrichtung hergestelltes weichelastisches Band in perspektivischer Ansicht. Die in Figur 3 verwendeten Bezugszeichen bezeichnen dieselben Teile wie in den Figuren 1 und 2, so dass diesbezüglich auf die Beschreibung der Figuren 1 und 2 verwiesen wird.

Das weichelastische Band 31 befindet sich bereits in einer kompakten, zum Bevorraten geeigneten Form. Das längliche Band 31 ist spiralförmig um ein etwa mittig vorgesehenes Trägerelement 21 angeordnet und in diese Stellung vorgeformt bzw. gehärtet. Die einzelnen Bandschichten oder Lagen sind dabei durch das Trennmittel 2 voneinander beabstandet. Das so gefertigte Band ist in diesem kompakten Zustand relativ spannungsarm. In anderen Varianten der Erfindung kann das Trennmittel 2 nach dem Härten der weichelastischen Masse auch aus der Masse entnommen werden. Die kompakte Form des weichelastischen Bandes 31 bleibt dabei erhalten.

Im Folgenden wird die Funktionsweise der in den Figuren dargestellten erfindungsgemäßen Ausführungsform erläutert.

Der Hohlraum 22 des Formwerkzeugs 1 wird mit einer aushärtbaren flüssigen Masse, z.B. Silikon gefüllt und durch Einbringen des Trennmittels 2 in eine Bandform unterteilt. Hierfür wird vor dem Einfüllen der besagten Masse wenigstens eine Wandung 23 des Hohlraums 22 mit einem Separierungselement 24 z.B. mit Silikonpapier versehen. In dieser Ausführungsform wird der Boden 25 der Vertiefung 5 mit dem Separierungselement 24 versehen. Es schützt das Formwerkzeug 1 vor der klebrigen Masse und erleichtert so die spätere Entnahme der gehärteten Masse aus der Form.

Anschließend wird die Vertiefung 5 mit der besagten Masse gefüllt. Diese wird dabei um den mit dem Trägerelement 21 versehenen Formkern 6 herum gegossen und füllt den Hohlraum 22 bzw. die Vertiefung 5 nur zu etwa 80%. Das heißt, hat die Vertiefung 5 z. B. eine Höhe von 25 mm, wird die Masse nur etwa bis zu einer Höhe von 20 mm eingefüllt.

Die Vertiefung 5 und der Formkern 6 bestimmen so die spätere Form der weichelastischen Masse.

Das Trennmittel 2 wird in die Ausnehmung 14 des Deckels 4 des Formwerkzeugs 1 eingebracht und dort reib- und/oder formschlüssig befestigt. Wird das Formwerkzeug geschlossen, also der Deckel 4 auf das wannenartig ausgebildete Teil 3 des Formwerkzeugs 1 gesetzt, wird so gleichzeitig das Trennmittel 2 in den Hohlraum 22 bzw. die Vertiefung 5 eingebracht. Der Abstand der beiden Formwerkzeugteile 3, 4 wird dabei über die Distanzscheibe 20 so eingestellt, dass das Trennmittel 2 sich von einer Wandung des Hohlraums 22 zur anderen erstreckt, hier vom Deckel 4 bis zum Boden 25 der Vertiefung 5. Durch das Einbringen des Trennmittels 2 in den Hohlraum 22 steigt die Füllhöhe der weichelastischen Masse zwar an, bleibt jedoch unterhalb der Höhe der Vertiefung 5, wie in Figur 2 zu sehen. Der Deckel 4 bleibt somit frei von der weichelastischen Masse. Dies bietet den Vorteil, dass der Deckel 4 aus einem beliebigen Material hergestellt werden kann, da er nicht mit der weichelastischen Masse in Berührung kommt.
Des Weiteren wird der Deckel 4 so vor einem Anhaften der weichelastischen Masse an dem Deckel geschützt.

Gleichzeitig werden die einzelnen Formwerkzeugteile 3, 4 beim Schließen des Formwerkzeugs 1 über die Zentrierstifte 10 relativ zueinander positioniert. Die Zentrierstifte 10 des wannenartig ausgebildeten Teils 3 werden dabei durch bzw. in die Öffnungen 13 des Deckels 4 gesteckt. Der unterschiedliche Durchmesser der Zentrierstifte 10 bzw. der Öffnungen 13 verhindert dabei ein falsches bzw. verdrehtes Aufsetzen des Deckels 4 auf das wannenartig ausgebildete Teil 3. Die abgerundeten Enden der Zentrierstifte 10 wie auch die Phase 9 erleichtern dabei das Hineinfinden der Stifte 10 in die Öffnungen 13 bzw. des Trennmittels 2 in die Vertiefung 5 sowie das passgenaue Einsetzen.

Die weichelastische Masse wird anschließend zum Härten für einige Zeit in dem Formwerkzeug 1 belassen. In dieser Zeit härtet die Masse soweit, dass sie im Wesentlichen aus dem Formwerkzeug entnehmbar ist. Nach dem Härten wird die weichelastische Masse zusammen mit dem eingebetteten Formmittel 2 und dem von der Masse 2 eingefassten Trägerelement 21 aus dem Formwerkzeug 1 entnommen. Hierfür wird die reib- und/oder formschlüssige Verbindung des Deckels 4 mit dem Trennmittel 2 gelöst und das Formwerkzeug 1 geöffnet. Der Deckel 4 wird von dem wannenartig ausgebildeten Teil 3 entfernt während das Trennmittel 2 in der nun gehärteten weichelastischen Masse verbleibt. Anschließend wird die weichelastische Masse zusammen mit dem Trennmittel 2 aus dem wannenartig geformten Teil 3 entnommen. Durch die Eigenklebrigkeit der Masse bleiben auch das Trägerelement 21 und das Separierungselement 24 beim Entnehmen an ihr haften. Diese beiden Elemente 21, 24 bieten gute Angriffsflächen für den anschließenden Verpackungsprozess und einen guten Schutz für die weichelastische Masse. Zusammen mit dem Trennmittel 2 geben Sie der Masse außerdem zusätzlich Halt.

## Patentansprüche

1. Vorrichtung zum Herstellen von weichelastischen Bändern, insbesondere von Fugen- oder Dichtungsbändem, welche ein mehrteiliges Formwerkzeug (1) und ein Trennmittel (2) aufweist, wobei das Formwerkzeug (1) in geschlossenem Zustand einen Hohlraum (22) für die Aufnahme einer weichelastischen Masse aufweist, welcher durch das Trennmittel (2) in eine Bandform separiert ist.

2. Vorrichtung nach Anspruch 1,
**dadurch gekennzeichnet,**
**dass** das Trennmittel (2) eine folienartige Wand aufweist.

3. Vorrichtung nach wenigstens einem der vorhergehenden Ansprüche,
**dadurch gekennzeichnet,**
**dass** das Trennmittel (2) unter Ausbildung eines etwa wandartigen Zwischenraums für die weichelastische Masse annähemd spiralförmig angeordnet ist.

4. Vorrichtung nach wenigstens einem der vorhergehenden Ansprüche,
**dadurch gekennzeichnet,**
**dass** das Trennmittel (2) in einer Ausnehmung (14), insbesondere in einer Nut (15), eines Teils (4) des Formwerkzeugs (1) aufgenommen ist.

5. Vorrichtung nach wenigstens einem der vorhergehenden Ansprüche,
**dadurch gekennzeichnet,**
**dass** das Trennmittel (2) an einem Teil (4) des Formwerkzeugs (1) angeordnet ist und sich in geschlossenem Zustand des Formwerkzeugs (1) durch den Hohlraum (22) hindurch erstreckt und an wenigstens einem weiteren Teil (3) des Formwerkzeugs (1) zur Anlage kommt.

6. Vorrichtung nach wenigstens einem der vorhergehenden Ansprüche,
**dadurch gekennzeichnet,**
**dass** ein Teil (3) des Formwerkzeugs (1) etwa wannenartig ausgebildet ist und eine Vertiefung (5) für den Hohlraum (22) zur Aufnahme der weichelastischen Masse aufweist.

7. Vorrichtung nach wenigstens einem der vorhergehenden Ansprüche,
**dadurch gekennzeichnet,**
**dass** wenigstens an einem der Teile (3) des Formwerkzeugs (1) ein die spätere Form der weichelastischen Masse bestimmender Formkern (6) vorsehbar ist.

8. Vorrichtung nach Anspruch 7,
**dadurch gekennzeichnet,**
**dass** um den Formkern (6) herum ein ringartig geformtes Trägerelement (21) angeordnet ist.

9. Vorrichtung nach wenigstens einem der vorhergehenden Ansprüche,
**dadurch gekennzeichnet,**
**dass** wenigstens eine der Wandungen (25) des Hohlraums (22) mit einem Separierungselement (24) versehen ist.

10. Vorrichtung nach Anspruch 9,
**dadurch gekennzeichnet,**
**dass** das Separierungselement (24) einer Folie oder ein Papier ist.

11. Vorrichtung nach wenigstens einem der vorhergehenden Ansprüche,
**dadurch gekennzeichnet,**
**dass** in wenigstens einem Teil (3) des mehrteiligen Formwerkzeugs wenigstens zwei Zentrierstifte (10) vorgesehen sind und wenigstens ein anderes Teil (4) des Formwerkzeugs (1) Öffnungen (13) aufweist, welche mit den Zentrierstiften korrespondieren.

12. Vorrichtung nach wenigstens einem der vorhergehenden Ansprüche,
**dadurch gekennzeichnet,**
**dass** das Trennmittel (2) und/oder das Separierungselement (24) aus einem Material besteht, dessen Adhäsionskräfte zur weichelastischen Masse geringer sind als die Kohäsionskräfte der ausgehärteten weichelastischen Masse und die Kohäsionskräfte des Trennmittels (2) bzw. des Separierungselements (24).

13. Verfahren zum Herstellen von weichelastischen Bändern, insbesondere Fugen- oder Dichtungsbänder, bei welchem eine weichelastische Masse in einen Hohlraum (22) eines mehrteiliges Formwerkzeugs (1) eingebracht wird und ein die Masse in die Bandform separierendes Trennmittel (2) in den Hohlraum (22) eingesetzt wird und die Masse in dem Formwerkzeug (1) zu einem weichelastischen Masse aushärtet.

14. Verfahren nach Anspruch 12,
**dadurch gekennzeichnet,**
**dass** wenigstens eine Wandung (23, 25) des Hohlraums (22) vor dem Einfüllen der weichelastischen Masse mit einem Separierungselement (24), insbesondere mit einer Folie aus PE, PP oder einem beschichteten Papier, versehen wird.

15. Verfahren nach wenigstens einem der Ansprüche 12 und 13,
**dadurch gekennzeichnet,**
**dass** die weichelastische Masse um einen, die spätere Form der Masse bestimmenden Formkern (6) in dem Hohlraum (22) herum gegossen wird.

16. Verfahren nach Anspruch 14,
**dadurch gekennzeichnet,**
**dass** ein ringartiges Trägerelement (21) um den Formkern (6) herum angeordnet wird.

17. Verfahren nach wenigstens einem der Ansprüche 12 bis 15,
**dadurch gekennzeichnet,**
**dass** der Hohlraum (22) nur zu etwa 70% bis 90%, vorzugsweise zu etwa 75% bis 85% und insbesondere zu etwa 80% mit der weichelastischen Masse angefüllt wird.

18. Verfahren nach wenigstens einem der Ansprüche 12 bis 16,
**dadurch gekennzeichnet,**
**dass** das Trennmittel (2) in eine Ausnehmung (14), welche in wenigstens einem Teil (4) des Formwerkzeugs (1) vorgesehen ist, haltend eingebracht wird.

19. Verfahren nach wenigstens einem der Ansprüche 12 bis 17,
**dadurch gekennzeichnet,**
**dass** die gehärtete weichelastische Masse zusammen mit dem eingebetteten Trennmittel (2) und einem von der Masse eingefassten Trägerelement (21) aus dem Formwerkzeug (1) entnommen wird.

20. Weichelastisches Band, insbesondere Fugen- oder Dichtungsband, dessen Bandmaterial in einem komprimierten, formstabilen, zum Bevorraten geeigneten Zustand ausgeformt ist, wobei einzelne Lagen des Bands durch ein Trennmittel (2) voneinander beabstandet sind, und das Band aus dem Vorratszustand in etwa länglicher Form abnehmbar ist.

21. Weichelastisches, längliches Band nach Anspruch 20,
**dadurch gekennzeichnet,**
**dass** der Bandkörper in dem Bevorratungszustand mit einem mittig angeordneten Trägerelement (21) versehen ist.

22. Weichelastisches, längliches Band nach wenigstens einem der Ansprüche 20 und 21,
**dadurch gekennzeichnet,**
**dass** wenigstens eine Seitenfläche des komprimierten Bandkörpers mit einem Separierungselement (24) versehen ist.
